(19) Europäisches Patentamt
European Patent Office
Office européen des brevets

(11) **EP 4 462 511 A1**

(12) **EUROPEAN PATENT APPLICATION**
published in accordance with Art. 153(4) EPC

(43) Date of publication:
**13.11.2024 Bulletin 2024/46**

(21) Application number: **22953426.8**

(22) Date of filing: **01.08.2022**

(51) International Patent Classification (IPC):
**H01M 4/485** $^{(2010.01)}$

(52) Cooperative Patent Classification (CPC):
**H01M 4/485**

(86) International application number:
**PCT/CN2022/109373**

(87) International publication number:
**WO 2024/026609 (08.02.2024 Gazette 2024/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde, Fujian 352100 (CN)**

(72) Inventors:
• **ZHANG, Nannan**
**Ningde, Fujian 352100 (CN)**

• **SUN, Xin**
**Ningde, Fujian 352100 (CN)**
• **CHEN, Xiao**
**Ningde, Fujian 352100 (CN)**
• **XIE, Haotian**
**Ningde, Fujian 352100 (CN)**
• **WANG, Donghao**
**Ningde, Fujian 352100 (CN)**
• **JING, Erdong**
**Ningde, Fujian 352100 (CN)**

(74) Representative: **Kraus & Lederer PartGmbB**
**Thomas-Wimmer-Ring 15**
**80539 München (DE)**

(54) **POSITIVE ELECTRODE LITHIUM REPLENISHMENT AGENT AND PREPARATION METHOD THEREFOR, POSITIVE ELECTRODE SHEET, SECONDARY BATTERY, BATTERY MODULE, BATTERY PACK, AND ELECTRICAL DEVICE**

(57) The present application provides a positive electrode pre-lithiation reagent, which includes an inner core and a coating layer. The inner core includes a lithium-rich metal oxide; the coating layer covers the surface of the inner core and includes a conductive polymer and a low surface energy material. The surface energy of the low surface energy material is 10 mJ/m$^2$ to 35 mJ/m$^2$, optionally 10 mJ/m$^2$ to 22 mJ/m$^2$.

**FIG. 1**

**Description**

**TECHNICAL FIELD**

The present application relates to the field of secondary batteries, and particularly to a positive electrode pre-lithiation reagent and a method for preparing the same, a positive electrode plate, a secondary battery, a battery module, a battery pack, and an electrical apparatus.

**BACKGROUND ART**

Lithium ion batteries are widely used in consumer electronics for their advantages such as high energy density and power density and long cycle life. With the continuous development of electric vehicles and energy storage systems, people's requirements for the energy density of lithium-ion batteries are also increasing. Therefore, the development of high energy density, safe and reliable lithium-ion batteries appear to be particularly important. During formation of lithium-ion batteries, the formation of SEI film on a negative electrode surface consumes a large amount of active lithium, leading to a reduction in the initial coulombic efficiency of the batteries and a serious loss of irreversible capacity.

Pre-lithiation to positive or negative electrodes is one of the means to improve the reversible capacity and energy density of batteries. For positive electrode pre-lithiation, lithium-rich metal oxides as a pre-lithiation reagent have a high delithiation capacity, and also have a suitable initial delithiation voltage, which can match the charging potential of a positive electrode active material to play the effect of pre-lithiation, thus improving the energy density of the batteries. However, the lithium-rich metal oxides have the problems of poor conductivity and stability, which limit their application as the pre-lithiation reagent.

**SUMMARY OF THE INVENTION**

Based on the above problems, the present application provides a positive electrode pre-lithiation reagent and a method for preparing the same, a positive electrode plate, a secondary battery, a battery module, a battery pack, and an electrical apparatus. The positive electrode pre-lithiation reagent has both good conductivity and humidity resistance and is capable of improving the energy density and cycle life of the secondary battery.

In one aspect of the present application, provided is a positive electrode pre-lithiation reagent, which includes:

an inner core comprising a lithium-rich metal oxide; and
a coating layer covering the surface of the inner core and comprising a conductive polymer and a low surface energy material; where
surface energy of the low surface energy material is 10 mJ/m$^2$ to 35 mJ/m$^2$, optionally 10 mJ/m$^2$ to 22 mJ/m$^2$.

The surface energy of the low surface energy material is significantly lower than that of water. Since the surface of the inner core including the lithium-rich metal oxide is provided with the coating layer that includes the conductive polymer and the low surface energy material, the positive electrode pre-lithiation reagent has good conductivity and hydrophobicity. In this way, the stability and pre-lithiation efficiency of the pre-lithiation reagent can be improved, so that the energy density and cycle life of the secondary battery can be improved.

In some embodiments, in the coating layer, the conductive polymer and the low surface energy material are combined by intermolecular forces to form a hydrophobic structure. Since the conductive polymer and the low surface energy material are combined by intermolecular forces to form a hydrophobic structure on the surface of the lithium-rich metal oxide, the water repellency of the positive electrode pre-lithiation reagent can be further improved, and the material stability is better.

In some embodiments, the conductive polymer contains a conjugated bond or benzene ring group capable of forming a delocalized electron system.

In some embodiments, the conductive polymer has a conductivity of 0.1 S/cm to 10 S/cm at 25°C; optionally, the conductive polymer has a conductivity of 5 S/cm to 10 S/cm at 25°C.

In some embodiments, the conductive polymer includes at least one of polypyrrole, polyaniline, polythiophene, polyacetylene, polydiyne and poly(3,4-ethylenedioxythiophene) (PEDOT); optionally, the conductive polymer is a combination of at least one of polypyrrole and polyaniline and PEDOT.

In some embodiments, the low surface energy material includes at least one of an organofluorine compound, and long-chain alkyl acid with 12-18 carbon atoms and salts thereof.

In some embodiments, the organofluorine compound includes at least one of perfluorooctane sulfonate and salts thereof, tetraethylammonium perfluorooctanesulfonate and perfluorosebacic acid; the long-chain alkyl acid and salts thereof comprise at least one of long-chain alkyl sulfonic acid and salts thereof, and long-chain alkyl sulfuric acid and salts thereof; optionally, the long-chain alkyl acid and salts thereof comprise at least one of dodecylbenzenesulfonic acid, dodecylsulfonic acid, sodium tetradecyl sulfate, and sodium hexadecylbenzenesulfonate.

In some embodiments, the low surface energy material in the coating layer has a mass content of 0.05% to 10%; optionally, the low surface energy material in the coating layer has a mass content of 1.5% to 5%. When the mass content of the low surface energy material in the coating layer is within the above range, the positive electrode pre-lithiation reagent has good electrical conductivity and hydrophobicity.

In some embodiments, the lithium-rich metal oxide includes at least one of a lithium-nickel oxide, a lithium-cobalt oxide, a lithium-iron oxide, a lithium-manganese oxide, a lithium-zinc oxide, a lithium-magnesium oxide, a lithium-calcium oxide, a lithium-copper oxide, a lithium-tin oxide, a lithium-chromium oxide, a lithium-vanadium oxide, a lithium-niobium oxide and a lithium-molybdenum oxide, where the valence state of each of nickel, cobalt, iron, manganese, zinc, magnesium, calcium, copper, tin, chromium, vanadium, niobium and molybdenum is lower than its own highest oxidation valence state.

In some embodiments, the lithium-rich metal oxide includes at least one of $Li_2MnO_2$, $Li_5FeO_4$, $Li_6CoO_4$, $Li_2NiO_2$, at least one of $Li_2Cu_{x1}Ni_{1-x1-y1}M_{y1}O_2$, $Li_3VO_4$ and $Li_3NbO_4$;

where $0<x1\leq1$, $0\leq y1<0.1$, and $0<x1+y1\leq1$, M is selected from at least one of Zn, Sn, Mg, Fe and Mn; optionally, $0.2\leq x1\leq0.8$, or $0.4\leq x1\leq0.6$.

In some embodiments, the positive electrode pre-lithiation reagent has a Dv50 of 2 $\mu$m to 50 $\mu$m; optionally, the positive electrode pre-lithiation reagent has a Dv50 of 2 $\mu$m to 10 $\mu$m. If the Dv50 of the positive electrode pre-lithiation reagent is within the above range, the positive electrode pre-lithiation reagent has an appropriate pre-lithiation rate.

In some embodiments, the coating layer has a thickness of 0.5 $\mu$m to 5 $\mu$m; optionally, the coating layer has a thickness of 0.5 $\mu$m to 2 $\mu$m. The thickness of the coating layer in the positive electrode pre-lithiation reagent is within the above range, which can ensure that the positive electrode pre-lithiation reagent has an appropriate pre-lithiation rate, and has good conductivity and hydrophobicity.

In some embodiments, a contact angle between the coating layer and water is 120° to 160°; optionally, the contact angle between the coating layer and water is 140° to 150°. If the contact angle between the coating layer and water is within the above range, the positive electrode pre-lithiation reagent has good water repellency, and can avoid a water absorption reaction.

In some embodiments, the positive electrode pre-lithiation reagent has a water content of 10 ppm to 200 ppm according to Karl Fischer method.

In a second aspect, the present application provides a method for preparing a positive electrode pre-lithiation reagent, including the steps of:

mixing the lithium-rich metal oxide, the low surface energy material monomers, and the conductive polymer and carrying out a polymerization reaction to form the coating layer on the surface of the lithium-rich metal oxide.

In a third aspect, the present application provides a positive electrode plate, including:

a positive electrode current collector; and
a positive electrode film layer including the positive electrode pre-lithiation reagent described above.

In some embodiments, the positive electrode pre-lithiation reagent in the positive electrode film layer has a mass content of 0.1% to 10%;

optionally, the positive electrode pre-lithiation reagent in the positive electrode film layer has a mass content of 2% to 7%.

In a fourth aspect, the present application further provides a secondary battery, including the positive electrode plate described above.

In a fifth aspect, the present application further provides a battery module, including the secondary battery described above.

In a sixth aspect, the present application further provides a battery pack, including the battery module described above.

In a seventh aspect, the present application further provides an electrical apparatus, including at least one selected from the secondary battery, the battery module, or the battery pack described above.

Details of one or more embodiments of the present application are set forth in the following accompanying drawings and description, and other features, objectives, and advantages of the present application will become apparent from the specification, accompanying drawings, and claims.

## DESCRIPTION OF DRAWINGS

Fig. 1 is a schematic diagram of a secondary battery according to an embodiment of the present application;

Fig. 2 is an exploded view of the secondary battery according to an embodiment of the present application shown in Fig. 1;

Fig. 3 is a schematic diagram of a battery module according to an embodiment of the present application;

Fig. 4 is a schematic diagram of a battery pack according to an embodiment of the present application;

Fig. 5 is an exploded view of the battery pack according to an embodiment of the present application shown in Fig. 4; and

Fig. 6 is a schematic diagram of an electrical apparatus according to an embodiment of the present application in which a secondary battery is used as a power source.

Description of reference numerals:

1. battery pack; 2. upper box body; 3. lower box body; 4. battery module; 5. secondary battery; 51. case; 52. electrode assembly; 53. cover plate; and 6. electrical apparatus.

In order to better describe and illustrate those embodiments and/or examples of the invention disclosed herein, reference may be made to one or more sets of accompanying drawings. The additional details or examples used to describe the accompanying drawings should not be considered a limitation on the scope of any of the disclosed inventions, the embodiments and/or examples presently described, and the best pattern of these inventions as presently understood.

## DETAILED DESCRIPTION

In order to make the prevent application convenient to understand, the present application will be described more comprehensively below with reference to the related drawings. The drawings show preferred embodiments of the present application. However, the present application may be implemented in various forms and is not limited to the embodiments described herein. On the contrary, these embodiments are provided to intend to make the understanding of the disclosure of the present application more thorough and comprehensive.

Unless otherwise defined, all technical and scientific terms used herein shall have the same meanings as commonly understood by those skilled in the art to which this application pertains. The terms used herein in the specification of the present application are for description of specific embodiments only without any intention to limit the present application. The term "and/or" used herein includes any or all combinations of one or more associated items that are listed.

The present application provides a positive electrode pre-lithiation reagent and a method for preparing the same, a positive electrode plate using the positive electrode pre-lithiation reagent, a secondary battery, a battery module, a battery pack and an electrical apparatus. The secondary battery is applicable to various electrical apparatuses using batteries, such as mobile phones, portable apparatuses, laptops, battery vehicles, electric toys, electric tools, electric vehicles, ships, spacecrafts, and the like. For example, the spacecrafts include airplanes, rockets, space shuttles, spaceships, etc.

An embodiment of the present application provides a positive electrode pre-lithiation reagent, including an inner core and a coating layer. The inner core includes a lithium-rich metal oxide. The coating layer covers the surface of the inner core and includes a conductive polymer and a low surface energy material. Surface energy of the low surface energy material is 10 mJ/m$^2$-35 mJ/m$^2$, optionally 10 mJ/m$^2$-22 mJ/m$^2$.

The lithium-rich metal oxide usually has poor conductivity and is prone to deterioration by reacting with moisture or carbon dioxide in the air, affecting the pre-lithiation performance of the material. The surface energy of the low surface energy material is significantly lower than that of water. Since the surface of the inner core including the lithium-rich metal oxide is provided with the coating layer that includes the conductive polymer and the low surface energy material, the positive electrode pre-lithiation reagent has good conductivity and hydrophobicity. In this way, the stability and pre-lithiation efficiency of the pre-lithiation reagent can be improved, so that the energy density and cycle life of the secondary battery can be improved.

Specifically, surface energy of a solid is the reversible non-expansion work required to increase the surface per unit of the solid at a given temperature and pressure. The surface energy of a solid can be estimated by extrapolation of a $\gamma$-T curve. Firstly, surface tension of a solid material when it is in liquid phase at slightly above its melting point is determined according to the following equation:

$$\gamma V^{2/3}=k(Tc-T)$$

where $\gamma$ is the measured surface energy of the solid, V is the molar volume, k is the constant, Tc is the critical temperature, and T is the actual temperature. 2) a $\gamma$-T curve is made, a value below the freezing point is then obtained by graphing and extrapolating through the extrapolation method, so as to estimate the surface energy of the solid. The surface energy recorded in the present application is the surface energy at 0 K, under vacuum.

In some embodiments, in the coating layer, the conductive polymer and the low surface energy material are combined by intermolecular forces to form a hydrophobic structure. Since the conductive polymer and the low surface energy material are combined by intermolecular forces to form a hydrophobic structure on the surface of the lithium-rich metal oxide, the water repellency of the positive electrode pre-lithiation reagent can be further improved, and the material stability is better.

In some embodiments, the conductive polymer contains a conjugated bond or benzene ring group capable of forming a delocalized electron system.

In some embodiments, the conductive polymer has a conductivity of 0.1 S/cm to 10 S/cm at 25°C. The conductivity of the conductive polymer is within the above range, which can effectively improve the conductivity of the positive electrode pre-lithiation reagent, thereby improving the utilization efficiency of the positive electrode pre-lithiation reagent. Optionally, the conductivity of the conductive polymer may be in a range consisting of any of the following values: 0.1 S/cm, 0.5 S/cm, 1 S/cm, 2 S/cm, 4 S/cm, 5 S/cm, 6 S/cm, 8 S/cm, or 10 S/cm. Further, the conductive polymer has a conductivity of 5 S/cm to 10 S/cm at 25°C. Specifically, the conductivity of the conductive polymer can be obtained by using an RTS-4 four-probe tester to test the conductivity of a sample five times, and then taking an average value in S/m. In the embodiment of the present application, the conductivity of the conductive polymer is obtained by testing at 25°C.

In some embodiments, the conductive polymer includes at least one of polypyrrole, polyaniline, polythiophene, polyacetylene, polydiyne and poly(3,4-ethylenedioxythiophene) (PEDOT). Optionally, the conductive polymer is a combination of at least one of polypyrrole and polyaniline and PEDOT. All of the above conductive polymers have good conductivity, and are used in the coating layer of the positive electrode pre-lithiation reagent, which can effectively improve the conductivity of the positive electrode pre-lithiation reagent.

In some embodiments, the low surface energy material includes at least one of an organofluorine compound, and long-chain alkyl acid with 12-18 carbon atoms and salts thereof. The number of carbon atoms of the long-chain alkyl acid and salts thereof is optionally 12, 13, 14, 15, 16, 17 or 18. The organofluorine compound has a low intermolecular cohesive force, the intermolecular force between the air and an organofluorine compound interface is small, the surface free energy is low, and the surface friction coefficient is small, thus, the conductive polymer used for the coating layer has good hydrophobicity. A σ-bond of the long-chain alkyl acid has small polarity, and its molecular dipole moment is zero, which is non-polar, and when used in the coating layer, the long-chain alkyl terminal has good hydrophobicity on the surface of the positive electrode pre-lithiation reagent.

In some embodiments, the organofluorine compound includes at least one of perfluorooctane sulfonate and salts thereof, tetraethylammonium perfluorooctanesulfonate and perfluorosebacic acid. The long-chain alkyl acid and salts thereof include at least one of long-chain alkyl sulfonic acid and salts thereof, and long-chain alkyl sulfuric acid and salts thereof. Optionally, the long-chain alkyl acid and salts thereof include at least one of dodecylbenzenesulfonic acid, dodecylsulfonic acid, sodium tetradecyl sulfate, and sodium hexadecylbenzene sulfonate.

In some embodiments, the low surface energy material in the coating layer has a mass content of 0.05% to 10%. When the mass content of the low surface energy material in the coating layer is within the above range, the positive electrode pre-lithiation reagent has good electrical conductivity and hydrophobicity. If the percentage of the low surface energy material is too low, the hydrophobicity of the positive electrode pre-lithiation reagent is reduced; if the percentage of the low surface energy material is too high, de-intercalation of ions will be hindered and the pre-lithiation efficiency will be affected. Optionally, the mass content of the low surface energy material in the coating layer may be in a range consisting of any of the following values: 0.05%, 0.1%, 0.5%, 1%, 2%, 4%, 5%, 6%, 8%, or 10%. Further, the low surface energy material in the coating layer has a mass content of 1.5% to 5%.

In some embodiments, the lithium-rich metal oxide includes but is not limited to at least one of a lithium-nickel oxide, a lithium-cobalt oxide, a lithium-iron oxide, a lithium-manganese oxide, a lithium-zinc oxide, a lithium-magnesium oxide, a lithium-calcium oxide, a lithium-copper oxide, a lithium-tin oxide, a lithium-chromium oxide, a lithium-vanadium oxide, a lithium-niobium oxide and a lithium-molybdenum oxide, where the valence state of each of nickel, cobalt, iron, manganese, zinc, magnesium, calcium, copper, tin, chromium, vanadium, niobium and molybdenum is lower than its own highest oxidation valence state.

In some embodiments, the lithium-rich metal oxide includes, but is not limited to, at least one of $Li_2MnO_2$, $Li_5FeO_4$, $Li_6CoO_4$, $Li_2NiO_2$, $Li_2Cu_xNi_{1-x-y}M_{y1}O_2$, $Li_3VO_4$ and $Li_3NbO_4$;
where $0<x\leq1$, $0\leq y<0.1$, and $0<x1+y1\leq1$, M is selected from at least one of Zn, Sn, Mg, Fe and Mn; optionally, $0.2\leq x\leq0.8$, or $0.4\leq x\leq0.6$.

In some embodiments, the positive electrode pre-lithiation reagent has a Dv50 of 2 $\mu$m to 50 $\mu$m. If the Dv50 of the positive electrode pre-lithiation reagent is within the above range, the positive electrode pre-lithiation reagent has an appropriate pre-lithiation rate. If the median particle size Dv50 is too small, it is easy to cause the positive electrode pre-lithiation material to agglomerate and coagulate in a slurry preparation process; if the median particle size Dv50 is too large, it will increase the polarization in de-intercalation of lithium ions of the pre-lithiation reagent, resulting in a reduction of the pre-lithiation efficiency. Optionally, the Dv50 of the positive electrode pre-lithiation reagent may be in a range consisting of any of the following values: 2 $\mu$m, 5 $\mu$m, 10 $\mu$m, 15 $\mu$m, 20 $\mu$m, 25 $\mu$m, 30 $\mu$m, 35 $\mu$m, 40 $\mu$m, 45 $\mu$m, or 50 $\mu$m. Further, the positive electrode pre-lithiation reagent has a Dv50 of 2 $\mu$m to 10 $\mu$m.

In the present application, Dv50 refers to the particle size corresponding to a cumulative size distribution number of particles in a volume cumulative distribution curve that reaches 50%, which has a physical meaning that particles with a size less than (or greater than) this particle size account for 50%. As an example, Dv50 can be conveniently determined using a laser particle size analizer, such as a Mastersizer 2000E laser particle size analyzer from Malvern Instruments Ltd. of the United Kingdom, with reference to the GB/T 19077-2016 particle size distribution laser diffraction method.

In some embodiments, the coating layer has a thickness of 0.5 $\mu$m to 5 $\mu$m. The thickness of the coating layer in the positive electrode pre-lithiation reagent is within the above range, which can ensure that the positive electrode pre-lithiation reagent has an appropriate pre-lithiation rate, and has good conductivity and hydrophobicity. Optionally, the thickness of the coating layer may be in a range consisting of any of the following values: 0.5 $\mu$m, 1 $\mu$m, 2 $\mu$m, 3 $\mu$m, 4 $\mu$m, or 5 $\mu$m. Further, the coating layer has a thickness of 0.5 $\mu$m to 2 $\mu$m.

Contact angle ($\theta$) of a liquid on the surface of a solid material is an important parameter for measuring the wetting performance of that liquid on the surface of the material. If the contact angle between the material and water satisfies $\theta <$ 90°, the material surface is hydrophilic and easy to wet; if $\theta > 90°$, the material surface is hydrophobic and resistant to wetting. In some embodiments, the contact angle between the coating layer and water is 120° to 160°. Optionally, the contact angle between the coating layer and water is 140° to 150°. If the contact angle between the coating layer and water is within the above range, the positive electrode pre-lithiation reagent has good water repellency, and can avoid a water absorption reaction. Specifically, a coating layer film material is prepared, and contact angle between the coating layer film material and water is tested by a contact angle tester as the contact angle between the coating layer and water.

In some embodiments, the positive electrode pre-lithiation reagent has a water content of 10 ppm to 200 ppm according to Karl Fischer method.

Another embodiment of the present application provides a method for preparing a positive electrode pre-lithiation reagent, including the steps of:

mixing the lithium-rich metal oxide, the low surface energy material monomers, and the conductive polymer and carrying out a polymerization reaction to form the coating layer on the surface of the lithium-rich metal oxide.

It is to be noted that the manner of forming the coating layer on the surface of the lithium-rich metal oxide is not limited to the above-mentioned in-situ polymerization method, and common methods known in the art, such as liquid-phase solvent-thermal coating, electrochemical deposition, and the like, may also be used.

Moreover, the positive electrode plate, secondary battery, battery module, battery pack and electrical apparatus of the present application will be described below with appropriate reference to the drawings.

In an embodiment of the present application, a secondary battery is provided.

Generally, the secondary battery includes a positive electrode plate, a negative electrode plate, an electrolyte, and a separator. During charging and discharging of the battery, active ions are intercalated and deintercalated back and forth between the positive electrode plate and the negative electrode plate. The electrolyte serves to conduct ions between the positive electrode plate and the negative electrode plate. The separator is disposed between the positive electrode plate and the negative electrode plate, and mainly functions to prevent a short circuit between the positive electrode and the negative electrode while allowing ions to pass through.

Positive electrode plate

The positive electrode plate includes a positive electrode current collector and a positive electrode film layer disposed on at least one surface of the positive electrode current collector, where the positive electrode film layer includes a positive electrode active material and the positive electrode pre-lithiation reagent.

As an example, the positive-electrode current collector has two opposite surfaces in its own thickness direction, and the positive electrode film layer is arranged on either or both of the two opposite surfaces of the positive-electrode current collector.

In some embodiments, the positive electrode current collector may be a metal foil current collector or a composite current collector. For example, an aluminum foil can be used as the metal foil. The composite current collector may include a high molecular material substrate layer and a metal layer formed on at least one surface of the high molecular material substrate layer. The composite current collector can be formed by forming a metal material such as aluminum, aluminum alloy, nickel, nickel alloy, titanium, titanium alloy, silver and silver alloy on a high molecular material substrate. The high molecular material subtract includes polypropylene (PP), polyethylene terephthalate (PET), polybutylene terephthalate (PBT), polystyrene (PS), polyethylene (PE), and the like.

In some embodiments, the positive electrode pre-lithiation reagent has a mass content of 0.1% to 10%, optionally 2% to 7%. If the percentage of the positive electrode pre-lithiation reagent is within the above range, the positive electrode plate has an appropriate pre-lithiation rate, which can improve the cycle life and energy density of the secondary battery. If the percentage of the positive electrode pre-lithiation reagent is too low, the loss of active lithium in the positive electrode plate cannot be replenished; if the percentage of the positive electrode pre-lithiation reagent is too high, the reversible lithium vacancy of positive electrode will be insufficient, affecting the energy density of the secondary battery.

In some embodiments, the positive electrode active material may be a positive electrode active material for batteries well known in the art. As an example, the positive active material may include at least one of the following materials: lithium-containing phosphate with olivine structure, lithium transition metal oxide, and their respective modified compounds. However, the present application is not limited to these materials, and other conventional materials useful as positive electrode active materials for batteries can also be used. It is possible to use only one of these positive electrode active materials alone, or to use more than two in combination. Here, examples of the lithium transition metal oxide may include, but are not limited to, at least one of a lithium-cobalt oxide (such as $LiCoO_2$), lithium-nickel oxide (such as $LiNiO_2$), lithium-manganese oxide (such as $LiMnO_2$ and $LiMn_2O_4$), lithium-nickel-cobalt oxide, lithium-manganese-cobalt oxide, lithium-nickel-manganese oxide, lithium-nickel-cobalt-manganese oxide (such as $LiNi_{1/3}Co_{1/3}Mn_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$), lithium-nickel-cobalt-aluminum oxide (such as $LiNi_{0.85}Co_{0.15}Al_{0.05}O_2$) and their respective modified compounds. Examples of the lithium-containing phosphate with olivine structure may include, but are not limited to, at least one of lithium iron phosphate (such as $LiFePO_4$ (also abbreviated as LFP)), lithium iron phosphate-carbon composite, lithium manganese phosphate (such as $LiMnPO_4$), lithium manganese phosphate-carbon composite, lithium manganese iron phosphate, and lithium manganese iron phosphate-carbon composite.

In some embodiments, the positive electrode film layer may further optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode film layer may further optionally include a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared by dispersing the components for preparing the positive electrode plate, for example, the positive electrode active material, the positive electrode pre-lithiation reagent, the conductive agent, the binder and any other components in a solvent (for example, N-methyl pyrrolidone) to form a positive electrode slurry; and coating the positive electrode slurry on a positive electrode current collector, followed by oven drying, cold pressing and other procedures, to obtain the positive electrode plate.

In some embodiments, the positive electrode film layer includes a positive electrode active material layer and a positive electrode pre-lithiation layer. The positive electrode pre-lithiation layer includes the positive electrode pre-lithiation reagent. The positive electrode current collector, the positive electrode active material layer and the positive electrode pre-lithiation layer are sequentially stacked. The positive electrode pre-lithiation layer is located on the surface of the positive electrode active material layer away from the positive electrode current collector, which has good ionic conductance and a short ionic transmission path to give full play to the pre-lithiation capacity, thus improving the pre-lithiation efficiency.

Negative electrode plate

The negative electrode plate includes a negative electrode current collector and a negative electrode active material layer arranged on at least one surface of the negative electrode current collector, and the negative electrode active material layer includes a negative electrode active material.

As an example, the negative electrode current collector has two opposite surfaces in its own thickness direction, and the negative electrode active material layer is provided on either one or both of the two opposite surfaces of the negative electrode current collector.

In some embodiments, the negative electrode current collector may be a metal foil current collector or a composite current collector. For example, a copper foil can be used as the metal foil. The composite current collector may include a high molecular material substrate layer and a metal layer formed on at least one surface of the high molecular material substrate. The composite current collector may be formed by forming a metal material such as copper, copper alloy, nickel, nickel alloy, titanium, titanium alloy, silver, and silver alloy on a high molecular material substrate. The high molecular material subtract includes polypropylene (PP), polyethylene terephthalate (PET), polybutylene terephthalate (PBT), polystyrene (PS), polyethylene (PE), and the like.

In some embodiments, a negative electrode active material for the battery well known in the art can be used as the negative electrode active material. As an example, the negative electrode active material may include at least one of the following materials: artificial graphite, natural graphite, soft carbon, hard carbon, silicon-based material, tin-based material, and lithium titanate, etc. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, tin-oxygen compound, or tin alloy. However, the present application is not limited to these materials, and other conventional materials useful as negative electrode active materials for batteries can also be used. These negative electrode active materials may be used alone or in combination of two or more thereof.

In some embodiments, the negative active material layer may further optionally include a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative active material layer may further optionally include a conductive agent. The conductive agent may be selected from at least one of superconducting carbon, acetylene black, carbon black, Ketjen black, carbon dots, carbon nanotubes, graphene, and carbon nanofibers.

In some embodiments, the negative active material layer may further optionally include other additives, such as thickeners (e.g., sodium carboxymethyl cellulose (CMC-Na)), etc.

In some embodiments, the negative electrode plate can be prepared by dispersing the components for preparing the negative electrode plate, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode plate.

Electrolyte

The electrolyte serves to conduct ions between the positive electrode plate and the negative electrode plate. The type of the electrolyte is not particularly limited in the present application, and can be selected according to requirements. For example, the electrolyte may be in a liquid state, a gel state, or an all-solid state.

In some embodiments, the electrolyte is an electrolyte solution. The electrolyte solution contains an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, methylsulfonylmethane, ethyl methyl sulfone and ethylsulfonylethane.

In some examples, the electrolyte solution further optionally contains an additive. For example, the additive may include a negative electrode film-forming additive and a positive electrode film-forming additive, and may also include additives that can improve certain battery properties, such as additives that improve battery overcharge performance, additives that improve battery high or low temperature performance, and the like.

Separator

In some embodiments, the secondary battery also includes a separator. The type of the separator is not particularly limited in the present application, and any well-known separator with a porous structure having good chemical stability and mechanical stability may be selected.

In some embodiments, the material of the separator may be selected from at least one of glass fiber, non-woven cloth, polyethylene, polypropylene, and polyvinylidene fluoride. The separator may be a single-layer film or a multi-layer composite film, which is not particularly limited. When the separator is a multi-layer composite film, the material of each layer may be the same or different, which is not particularly limited.

In some embodiments, the positive electrode plate, the negative electrode plate and the separator can be made into an electrode assembly by a winding process or a stacking process.

In some examples, the secondary battery may include an outer package. The outer package can be used to encapsulate the above-mentioned electrode assembly and electrolyte.

In some embodiments, the outer package of the secondary battery may be a hard shell, for example, a hard plastic shell, an aluminum shell, or a steel shell. The outer package of the secondary battery may also be a soft pack, such as a pouch. The pouch may be made of a plastic, and examples of the plastic include polypropylene, polybutylene terephthalate and polybutylene succinate.

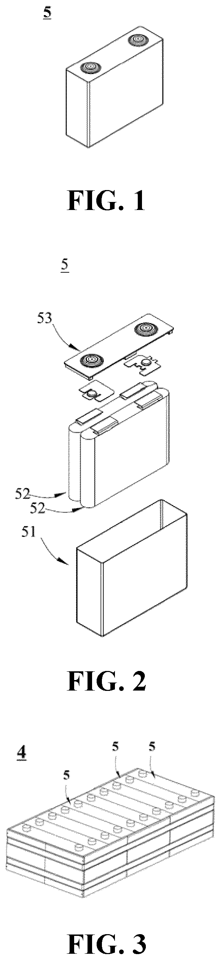

The present application has no particular limitation on the shape of the secondary battery, which may be cylindrical, square or any other shape. For example, Fig. 1 shows a secondary battery 5 with a square structure as an example.

In some embodiments, referring to Fig. 2, the outer package may include a case 51 and a cover plate 53. Here, the case 51 may include a bottom plate and a side plate connected to the bottom plate, with the bottom plate and the side plate enclosing to form an accommodating cavity. The case 51 has an opening in communication with the accommodating cavity, and the cover plate 53 can cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 included in the secondary battery 5 may be one or more, which may be selected by those skilled in the art according to specific actual requirements.

In some embodiments, the secondary batteries can be assembled into a battery module, and the number of secondary batteries included in the battery module can be one or more, and the specific number can be selected by those skilled in the art according to the application and capacity of the battery module.

Fig. 3 shows a battery module 4 as an example. Referring to Fig. 3, in the battery module 4, a plurality of secondary batteries 5 may be sequentially arranged in a length direction of the battery module 4. Of course, any other arrangements are also possible. The plurality of secondary batteries 5 may further be fixed by fasteners.

Optionally, the battery module 4 may further include a shell having an accommodating space, in which the plurality of secondary batteries 5 are accommodated.

In some embodiments, the battery module may further be assembled into a battery pack, and the number of battery module contained in the battery pack may be one or more, and can be selected by those skilled in the art according to the use and capacity of the battery pack.

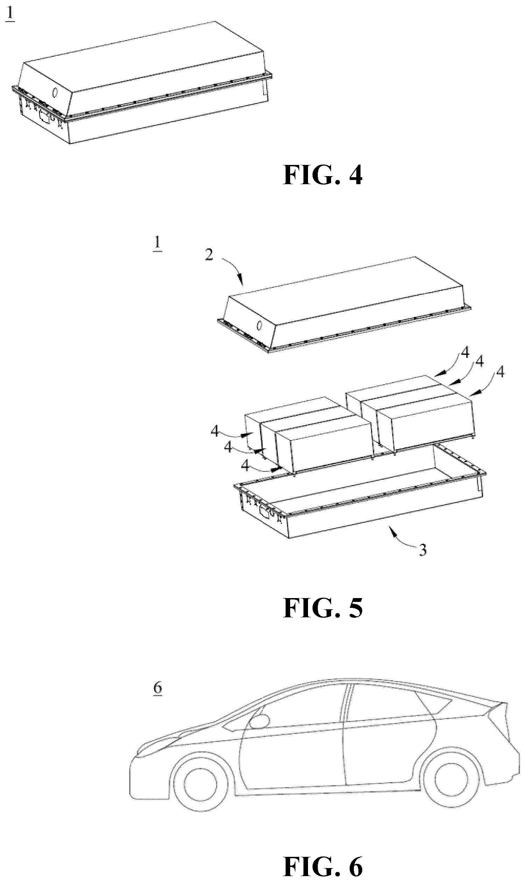

Figs. 4 and 5 show a battery pack 1 as an example. Referring to Figs. 4 and 5, the battery pack 1 may include a battery box and multiple battery modules 4 disposed in the battery box. The battery box includes an upper box body 2 and a lower box body 3, the upper box body 2 can cover the lower box body 3 to form a closed space for accommodating the battery modules 4. The plurality of battery modules 4 may be arranged in the battery box in any manner.

In addition, the present application further provides an electrical apparatus, and the electrical apparatus includes at least one of the secondary batteries, the battery module, or the battery pack provided in the present application. The secondary battery, the battery module, or the battery pack may be used as a power source for the electrical apparatus or an energy storage unit of the electrical apparatus. The electrical apparatus may include a mobile device, an electric vehicle, an electric train, ship, satellite energy storage system, and the like, but is not limited thereto. The electrical apparatus may be a mobile phone and a laptop; the electric vehicle may be an all-electric vehicle, a hybrid electric vehicle, a plug-in hybrid electric vehicle, an electric bicycle, an electric scooter, an electric golf cart, and an electric truck, and the like, but is not limited thereto.

For the electrical apparatus, the secondary battery, the battery module, or the battery pack can be selected according to its use requirements.

Fig. 6 is an example of an electrical apparatus 6. This electrical apparatus 6 is an all-electric vehicle, a hybrid electric vehicle, or a plug-in hybrid electric vehicle, etc. In order to meet the requirements of the electrical apparatus for high power and high energy density of secondary batteries, a battery pack or a battery module may be used.

As another example, the apparatus may be a mobile phone, a tablet, a laptop, etc. The apparatus is generally required to be light and thin, and may use a secondary battery as a power source.

Examples

Examples of the present application will be described hereinafter. The examples described below are illustrative and only used for explaining this application, and cannot be construed as limitations on this application. Where specific techniques or conditions are not specified in the examples, the techniques or conditions described in the literatures of the art or the product specifications are followed. Where manufacturers are not specified, the reagents or instruments used are conventional products and are commercially available.

Example 1:

Preparation of positive electrode pre-lithiation reagent: 8g of lithium iron oxide with a Dv50 of $2\mu m$ was dispersed in a chloroform solution containing 0.1 mol/L pyrrole, and then 0.015 mol/L potassium perfluorooctane sulfonate was slowly added dropwise into the mixed solution, and a polymerization reaction was carried out by stirring for 12h at room temperature (25 °C), to form a coating layer on the surface of lithium iron oxide. The obtained solid was washed by centrifugation with trichloromethane for three times and dried under vacuum at 60 °C for 12 h to obtain a positive electrode pre-lithiation reagent. The composition and thickness of the coating layer of the positive electrode pre-lithiation reagent were recorded in Table 1. The thickness of the coating layer of the positive electrode pre-lithiation reagent can be statistically obtained by observing transmission electron microscope (TEM) pictures of the positive electrode pre-lithiation reagent.

Moisture absorption test: The positive electrode pre-lithiation reagent was placed in a humidity environment of RH80% for 7 days, and water content of the positive electrode pre-lithiation reagent was tested by a Karl Fischer volumetric moisture meter.

Preparation of positive electrode plate: $LiFePO_4$ (LFP), positive electrode pre-lithiation reagents with different moisture absorption degrees, a conductive agent acetylene black, and a binder were fully stirred and mixed uniformly at a mass ratio of 93:4:1:2 in a N-methylpyrrolidone solvent NMP system, where a volume average particle size of the LFP particles was 1.2 $\mu$m, and then applied on an Al foil, followed by drying and cold pressing, to obtain a positive electrode plate.

Preparation of negative electrode plate: A negative electrode active material artificial graphite, an acetylene black conductive agent, a styrene-butadiene rubber (SBR) binder, and a sodium carboxymethyl cellulose (CMC) thickener were fully stirred and uniformly mixed at a weight ratio of 96.5:0.7:1.8:1 in a deionized water solvent system, and then the mixture was applied onto a Cu foil, followed by drying and cold pressing, to obtain a negative electrode plate.

Separator: A PE/PP porous polymer film of 12 $\mu$m was used as a separator.

Preparation of electrolyte: Ethylene carbonate (EC) and diethyl carbonate (DEC) were mixed at a mass ratio of 50:50 and 1.1 M $LiPF_6$ lithium salt was dissolved therein to obtain an electrolyte.

Preparation of secondary battery: The positive electrode plate, the separator, and the negative electrode plate were stacked in order, so that the separator was placed between the positive and negative electrodes for separation, and winding was performed to obtain a bare battery cell. The bare battery cell was placed in an outer package, injected with the formulated electrolyte, and then encapsulated.

Examples 2-3:

Examples 2-3 differ from Example 1 in that the median particle size Dv50 of lithium iron oxide is different. The median particle size Dv50 of lithium iron oxides used for positive electrode pre-lithiation reagents of Examples 2-3 is recorded in Table 1.

Examples 4-5:

Examples 4-5 differ from Example 1 in that the type of the conductive polymer is different. Conductive polymers used in positive electrode pre-lithiation reagents of Examples 4-5 are recorded in Table 1, and the positive electrode pre-lithiation reagents of Examples 4-5 can be produced by selecting replacement monomers according to the conductive polymers.

Examples 6-7:

Examples 6-7 differ from Example 1 in that the type of the low surface energy material is different. Low surface energy materials used for positive electrode pre-lithiation reagents of Examples 6-7 are recorded in Table 1.

Examples 8-12:

Examples 8-12 differ from Example 1 in that the mass content of the low surface energy material in the coating layer is different. mass contents of low surface energy materials in positive electrode pre-lithiation reagents of Examples 8-12 are recorded in Table 1, and the positive electrode pre-lithiation reagents of Examples 8-12 can be obtained by adjusting the amount of addition of the low surface energy materials according to the percentages of the low surface energy materials.

Examples 13-15:

Examples 13-15 differ from Example 1 in that the number of storage days of the positive electrode pre-lithiation reagents in a RH80% environment in the moisture absorption test is different.

Example 16:

Example 16 differs from Example 1 in that the electrolyte solution in the secondary battery of Example 16 is replaced with a solid-liquid hybrid electrolyte. Specifically, the solid-liquid hybrid electrolyte was prepared by adding 5 g of polymer matrix CA, 5 g of crosslinker PEGDA (Mn=400) and 0.05 g of initiator AIBN to 50 g of 1 M $LiPF_6$/EC+DEC liquid

electrolyte, and stirring at room temperature for 12 h to obtain an electrolyte precursor solution. The precursor solution was subjected to standing at 70°C for 1 h to obtain a CA/PEGDA gel electrolyte. Preparation of secondary battery: The positive electrode plate, the separator, and the negative electrode plate were stacked in order, so that the separator was placed between the positive and negative electrodes for separation, and winding was performed to obtain a bare battery cell. The electrolyte precursor solution was then injected into the cell and subjected to standing for 6 h to ensure that the electrodes and separator were completely infiltrated, and finally the cell was heated at 70 °C for 1 h to allow the in-situ polymerization and cross-linking of the electrolyte precursor solution in the battery.

Comparative Example 1:

Comparative Example 1 differs from Example 1 in that the positive electrode pre-lithiation reagent is uncoated lithium iron oxide.

Comparative Example 2:

Comparative Example 2 differs from Example 1 in that the coating layer of the positive electrode pre-lithiation reagent does not include a low surface energy material.

Comparative Examples 3-4:

Comparative Examples 3-4 differ from Comparative Example 2 in that the number of storage days of the positive electrode pre-lithiation reagents in a RH80% environment in the moisture absorption test is different.

Table 1 Composition and water content of positive electrode pre-lithiation reagents in Examples 1-15 and Comparative Examples 1-4

| Serial No. | Lithium iron oxide | Conductive polymer | | Low surface energy material | | Coating layer thickness (μm) | Storage days at RH80% | Moisture content (ppm) |
|---|---|---|---|---|---|---|---|---|
| | Median particle size Dv50 (μm) | Type | mass content (%) | Type | mass content (%) | | | |
| Example 1 | 2 | Polypyrrole | 98 | Potassium perfluorooctane sulfonate | 2 | 1.0 | 7 | 30 |
| Example 2 | 5 | Polypyrrole | 98 | Potassium perfluorooctane sulfonate | 2 | 1.0 | 7 | 33 |
| Example 3 | 10 | Polypyrrole | 98 | Potassium perfluorooctane sulfonate | 2 | 1.0 | 7 | 31 |
| Example 4 | 2 | Polyaniline | 98 | Potassium perfluorooctane sulfonate | 2 | 1.2 | 7 | 28 |
| Example 5 | 2 | Polypyrrole-polyaniline-PEDOT | 98 | Potassium perfluorooctane sulfonate | 2 | 1.3 | 7 | 26 |
| Example 6 | 2 | Polypyrrole | 98 | Dodecylbenzene sulfonic acid | 2 | 1.6 | 7 | 37 |
| Example 7 | 2 | Polypyrrole | 98 | Sodium hexadecylbenzene sulfonate | 2 | 2.4 | 7 | 25 |

(continued)

| Serial No. | Lithium iron oxide Median particle size Dv50 (μm) | Conductive polymer Type | mass content (%) | Low surface energy material Type | mass content (%) | Coating layer thickness (μm) | Storage days at RH80% | Moisture content (ppm) |
|---|---|---|---|---|---|---|---|---|
| Example 8 | 2 | Polypyrrole | 99.95 | Potassium perfluorooctane sulfonate | 0.05 | 1.2 | 7 | 108 |
| Example 9 | 2 | Polypyrrole | 99.9 | Potassium perfluorooctane sulfonate | 0.1 | 0.5 | 7 | 100 |
| Example 10 | 2 | Polypyrrole | 95 | Potassium perfluorooctane sulfonate | 5 | 2 | 7 | 20 |
| Example 11 | 2 | Polypyrrole | 93 | Potassium perfluorooctane sulfonate | 7 | 3 | 7 | 10 |
| Example 12 | 2 | Polypyrrole | 90 | Potassium perfluorooctane sulfonate | 10 | 5 | 7 | 17 |
| Example 13 | 2 | Polypyrrole | 98 | Potassium perfluorooctane sulfonate | 2 | 1.0 | 3 | 15 |
| Example 14 | 2 | Polypyrrole | 98 | Potassium perfluorooctane sulfonate | 2 | 1.0 | 15 | 130 |
| Example 15 | 2 | Polypyrrole | 98 | Potassium perfluorooctane sulfonate | 2 | 1.0 | 20 | 200 |
| Comparative Example 1 | 2 | / | / | / | / | / | 7 | 660 |
| Comparative Example 2 | 2 | Polypyrrole | 100 | / | / | 1.0 | 7 | 230 |
| Comparative Example 3 | 2 | Polypyrrole | 100 | / | / | 1.0 | 15 | 450 |
| Comparative Example 4 | 2 | Polypyrrole | 100 | / | / | 1.0 | 20 | 580 |

Note: The mass contents in Table 1 are all mass contents of substances in the coating layer.

As can be seen from data in Table 1, compared with the positive electrode pre-lithiation reagents in Comparative Examples 1-4, the positive electrode pre-lithiation reagents in Examples 1-15 were placed in a RH80% environment for 3-20 days, with the water content of 20 ppm to 200 ppm, which is significantly lower than that of the positive electrode pre-lithiation reagents in Comparative Examples 1-4; and the positive electrode pre-lithiation reagents in Examples 1-15 have good hydrophobicity and good material stability.

Tests:

Specific charge and discharge capacity test:

A battery was charged at room temperature (25°C) with constant current at a rate of 0.33C to end-of charge voltage, and then charged at constant voltage to 0.05C; and charging capacity Ec0 was measured and used to divide the mass of the positive active material of the battery to obtain the specific charge capacity. That is, specific charge capacity (mAh/g) = first-cycle charge capacity/mass of positive electrode active material.

The charged battery was then discharged with constant current at a rate of 0.33C to end-of charge voltage, and discharge capacity was measured as Ed0. The specific discharge capacity was obtained by dividing Ed0 by the mass of the positive electrode active material of the battery. That is, specific discharge capacity (mAh/g) = first-cycle discharge capacity/mass of positive electrode active material.

The above tests of specific charge capacity and specific discharge capacity were repeated 5 times each, and average values are the specific charge capacity and specific discharge capacity listed in Table 2 below.

Secondary battery high-temperature storage performance test:

For each example, five secondary batteries were taken for parallel tests, and each secondary battery was charged at room temperature at a rate of 1C until the voltage was equal to 3.65V, then discharged at a rate of 1C until the voltage was equal to 2.5V, and reversible capacity was measured as E0. The fully charged battery then placed in a 60°C oven and kept for 100 days, the secondary battery was taken out for testing, and its reversible capacity was immediately tested and recorded as En. Capacity retention rate $\varepsilon$ of the battery after 100 days of storage at 60°C was calculated according to the following formula, $\varepsilon=(En-E0)/E0\times100\%$.

Electrochemical performance test results of secondary batteries in Examples 1-16 and Comparative Examples 1 to 4 are recorded in Table 2.

Table 2 Electrochemical performance of secondary batteries in Examples 1-16 and Comparative Examples 1-4

| No. | Specific charge capacity (mAh/g) | Specific discharge capacity (mAh/g) | Capacity retention rate after 100 days of storage at 60°C |
|---|---|---|---|
| Example 1 | 177 | 143 | 97.5 |
| Example 2 | 181 | 144.3 | 97.1 |
| Example 3 | 171 | 140 | 96.2 |
| Example 4 | 180 | 145 | 97.8 |
| Example 5 | 175 | 144 | 97.1 |
| Example 6 | 178 | 143 | 96.9 |
| Example 7 | 181.5 | 143.7 | 96.5 |
| Example 8 | 173.4 | 141 | 94.6 |
| Example 9 | 160 | 138 | 92.3 |
| Example 10 | 170 | 143 | 95.8 |
| Example 11 | 162 | 147 | 93.5 |
| Example 12 | 169 | 142.3 | 95.2 |
| Example 13 | 158 | 144 | 90.4 |
| Example 14 | 161 | 146 | 92.8 |
| Example 15 | 154 | 143 | 91.3 |
| Example 16 | 174 | 145 | 97.9 |
| Comparative Example 1 | 145 | 134 | 87.1 |
| Comparative Example 2 | 156 | 143 | 92.4 |
| Comparative Example 3 | 153 | 141 | 91.8 |
| Comparative Example 4 | 149 | 140 | 90.9 |

As can be seen from the relevant data in Table 2, in the secondary batteries of Examples 1-16, the water content of the positive electrode pre-lithiation reagents is 20 ppm to 200 ppm, the specific charge capacity of the secondary batteries is 154 mAh/g to 181.5 mAh/g, the specific discharge capacity of the secondary batteries is 138 mAh/g to 147 mAh/g, and the capacity retention rate after 100 days of storage at 60°C is 90.4% to 97.9%. Thus, the secondary batteries in Examples 1-16 have high specific charge capacity during the first charging and discharging as the positive electrode pre-lithiation reagents are effective in pre-lithiation to enhance the energy density of the secondary batteries, so the secondary batteries have high specific charge capacity, and the secondary batteries have good high-temperature storage stability.

In the secondary battery of Comparative Example 1, the positive electrode pre-lithiation reagent is uncoated lithium iron oxide, the water content of the positive electrode pre-lithiation reagent is 660 ppm, and the specific charge capacity of the secondary battery and the capacity retention rate after 100 days of storage at 60°C are significantly lower than those of Examples 1-16, and the pre-lithiation effect of the positive electrode pre-lithiation reagent and the high-temperature storage stability of the secondary battery are poor.

In the secondary batteries of Comparative Examples 2-4, the coating layers of the positive electrode pre-lithiation reagents do not include a low surface energy material, the water content of the positive electrode pre-lithiation reagents is 230 ppm to 580 ppm, and the specific charge capacity of the secondary batteries and the capacity retention rate after 100 days of storage at 60°C are better than those of Comparative Example 1, but are still lower than those of Examples 1-16. It can be seen that the positive electrode pre-lithiation reagent coated only by the conductive polymer can only improve the pre-lithiation effect of the positive electrode pre-lithiation reagent and the high-temperature storage stability of the secondary batteries to a limited extent.

The technical features of the above examples can be combined arbitrarily. In order to make the description concise, not all possible combinations of the technical features in the above examples are described. However, all the combinations of the technical features should be considered as falling within the scope described in this specification provided that they do not conflict with each other.

The above examples only describe several embodiments of the present application, and the description thereof is specific and detailed, but cannot therefore be understood as a limitation on the patent scope of the present application. It should be noted that those of ordinary skill in the art may further make variations and improvements without departing from the concept of the present application, all of which fall within the protection scope of the present application. Therefore, the patent protection scope of the present application should be subject to the appended claims.

**Claims**

1. A positive electrode pre-lithiation reagent, comprising:

   an inner core, comprising a lithium-rich metal oxide; and
   a coating layer covering the surface of the inner core and comprising a conductive polymer and a low surface energy material;
   wherein a surface energy of the low surface energy material is 10 mJ/m$^2$ to 35 mJ/m$^2$, optionally 10 mJ/m$^2$ to 22 mJ/m$^2$.

2. The positive electrode pre-lithiation reagent according to claim 1, wherein in the coating layer, the conductive polymer and the low surface energy material are combined by intermolecular forces to form a hydrophobic structure.

3. The positive electrode pre-lithiation reagent according to claim 1 or 2, wherein the conductive polymer contains a conjugated bond or benzene ring group capable of forming a delocalized electron system.

4. The positive electrode pre-lithiation reagent according to any one of claims 1 to 3, wherein the conductive polymer has a conductivity of 0.1 S/cm to 10 S/cm at 25°C;
   optionally, the conductive polymer has a conductivity of 5 S/cm to 10 S/cm at 25°C.

5. The positive electrode pre-lithiation reagent according to any one of claims 1 to 4, wherein the conductive polymer comprises at least one of polypyrrole, polyaniline, polythiophene, polyacetylene, polydiyne and poly(3,4-ethylenedioxythiophene) (PEDOT);
   optionally, the conductive polymer is a combination of at least one of polypyrrole and polyaniline and PEDOT.

6. The positive electrode pre-lithiation reagent according to any one of claims 1 to 5, wherein the low surface energy material comprises at least one of an organofluorine compound, and long-chain alkyl acid with 12-18 carbon atoms and salts thereof.

7. The positive electrode pre-lithiation reagent according to claim 6, wherein the organofluorine compound comprises at least one of perfluorooctane sulfonate and salts thereof, tetraethylammonium perfluorooctanesulfonate and perfluorosebacic acid;

   the long-chain alkyl acid and salts thereof comprise at least one of long-chain alkyl sulfonic acid and salts thereof, and long-chain alkyl sulfuric acid and salts thereof; optionally, the long-chain alkyl acid and salts thereof comprise at least one of dodecylbenzenesulfonic acid, dodecylsulfonic acid, sodium tetradecyl sulfate, and sodium hexadecylbenzene sulfonate.

8. The positive electrode pre-lithiation reagent according to any one of claims 1 to 7, wherein the low surface energy material in the coating layer has a mass content of 0.05% to 10%;

   optionally, the low surface energy material in the coating layer has a mass content of 1.5% to 5%.

9. The positive electrode pre-lithiation reagent according to any one of claims 1 to 8, wherein the lithium-rich metal oxide comprises at least one of a lithium-nickel oxide, a lithium-cobalt oxide, a lithium-iron oxide, a lithium-manganese oxide, a lithium-zinc oxide, a lithium-magnesium oxide, a lithium-calcium oxide, a lithium-copper oxide, a lithium-tin oxide, a lithium-chromium oxide, a lithium-vanadium oxide, a lithium-niobium oxide and a lithium-molybdenum oxide, wherein the valence state of each of nickel, cobalt, iron, manganese, zinc, magnesium, calcium, copper, tin, chromium, vanadium, niobium and molybdenum is lower than its own highest oxidation valence state.

10. The positive electrode pre-lithiation reagent according to any one of claims 1 to 9, wherein the lithium-rich metal oxide comprises at least one of $Li_2MnO_2$, $Li_5FeO_4$, $Li_6CoO_4$, $Li_2NiO_2$, at least one of $Li_2Cu_{x1}Ni_{1-x1-y1}M_{y1}O_2$, $Li_3VO_4$ and $Li_3NbO_4$;

    wherein $0<x1\leq1$, $0\leq y1<0.1$, and $0<x1+y1\leq1$, M is selected from at least one of Zn, Sn, Mg, Fe and Mn; optionally, $0.2\leq x1\leq0.8$, or $0.4\leq x1\leq0.6$.

11. The positive electrode pre-lithiation reagent according to any one of claims 1 to 10, wherein the positive electrode pre-lithiation reagent has a Dv50 of 2 $\mu$m to 50 $\mu$m;

    optionally, the positive electrode pre-lithiation reagent has a Dv50 of 2 $\mu$m to 10 $\mu$m.

12. The positive electrode pre-lithiation reagent according to any one of claims 1 to 11, wherein the coating layer has a thickness of 0.5 $\mu$m to 5 $\mu$m;

    optionally, the coating layer has a thickness of 0.5 $\mu$m to 2 $\mu$m.

13. The positive electrode pre-lithiation reagent according to any one of claims 1 to 12, wherein a contact angle between the coating layer and water is 120° to 160°;

    optionally, the contact angle between the coating layer and water is 140° to 150°.

14. The positive electrode pre-lithiation reagent according to any one of claims 1 to 13, wherein the positive electrode pre-lithiation reagent has a water content of 10 ppm to 200 ppm according to Karl Fischer method.

15. A method for preparing a positive electrode pre-lithiation reagent according to any one of claims 1 to 14, comprising the steps of:

    mixing the lithium-rich metal oxide, the low surface energy material monomers, and the conductive polymer and carrying out a polymerization reaction to form the coating layer on the surface of the lithium-rich metal oxide.

16. A positive electrode plate, comprising:

    a positive electrode current collector; and
    a positive electrode film layer comprising the positive electrode pre-lithiation reagent of any one of claims 1 to 14.

17. The positive electrode plate according to claim 16, wherein the positive electrode pre-lithiation reagent in the positive electrode film layer has a mass content of 0.1% to 10%;

    optionally, the positive electrode pre-lithiation reagent in the positive electrode film layer has a mass content of 2% to 7%.

18. A secondary battery, comprising the positive electrode plate of claim 16 or 17.

19. A battery module, comprising the secondary battery of claim 18.

20. A battery pack, comprising the battery module of claim 17.

21. An electrical apparatus, comprising at least one selected from the secondary battery of claim 18, the battery module of claim 19 or the battery pack of claim 20.

5

FIG. 1

5

FIG. 2

FIG. 3

**FIG. 4**

**FIG. 5**

**FIG. 6**

## INTERNATIONAL SEARCH REPORT

| International application No. |
| --- |
| **PCT/CN2022/109373** |

| A. | CLASSIFICATION OF SUBJECT MATTER |
| --- | --- |

H01M 4/485(2010.01)i

According to International Patent Classification (IPC) or to both national classification and IPC

| B. | FIELDS SEARCHED |
| --- | --- |

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, DWPI, CNTXT, CNKI: 正极, 阴极, 补, 锂, 疏水, 表面张力, 极性, 包覆, 包裹, 覆盖, 核, 芯, 壳, positive, cathode, supply, li, lithium, hydrophobic, cover, coat

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 114566645 A (XIAMEN XIAWU NEW ENERGY MATERIALS CO., LTD.) 31 May 2022 (2022-05-31)<br>    description, paragraphs 5-57 | 1-21 |
| Y | CN 113381009 A (INSTITUTE OF PHYSICS, CHINESE ACADEMY OF SCIENCES) 10 September 2021 (2021-09-10)<br>    description, paragraphs 7-40 | 1-21 |
| Y | CN 112951620 A (DALIAN INSTITUTE OF CHEMICAL PHYSICS, CHINESE ACADEMY OF SCIENCES) 11 June 2021 (2021-06-11)<br>    description, paragraphs 4-43 | 1-21 |
| A | CN 114824267 A (SVOLT ENERGY TECHNOLOGY CO., LTD.) 29 July 2022 (2022-07-29)<br>    entire document | 1-21 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 November 2022** | **21 December 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
| --- |
| **PCT/CN2022/109373** |

| Patent document cited in search report | | | Publication date (day/month/year) | Patent family member(s) | Publication date (day/month/year) |
| --- | --- | --- | --- | --- | --- |
| CN | 114566645 | A | 31 May 2022 | None | |
| CN | 113381009 | A | 10 September 2021 | None | |
| CN | 112951620 | A | 11 June 2021 | None | |
| CN | 114824267 | A | 29 July 2022 | None | |

Form PCT/ISA/210 (patent family annex) (January 2015)